# NEW EUROPEAN PATENT SPECIFICATION

(11) **EP 2 731 824 B2**
(45) Date of publication and mention of the opposition decision: **08.08.2018**
(45) Mention of the grant of the patent: 22.04.2015
(21) Application number: 12759202.0
(22) Date of filing: 13.07.2012
(51) Int. Cl.: B60Q 1/00, F21S 8/00, G02B 6/00

(54) **AUTOMOTIVE LIGHT**
KRAFTFAHRZEUGLICHT
DISPOSITIF D'ÉCLAIRAGE D'AUTOMOBILE

(30) Priority: 13.07.2011 IT TV20110100
(43) Date of publication of application: 21.05.2014
(73) Proprietor: Automotive Lighting Italia S.p.A., 10078 Venaria Reale (Torino) (IT)
(72) Inventor: DOMINI, Chiara, I-33100 Udine (IT); MARCORI, Franco, I-33015 Moggio Udinese (IT); PARONI, Sara, I-33033 Codroipo (IT)
(74) Representative: Bellemo, Matteo
(86) International application number: PCT/IB2012/053607
(87) International publication number: WO 2013/008215

(56) References cited:
- EP-A1- 1 775 511
- EP-A1- 1 780 463
- EP-A1- 2 119 956
- EP-A2- 1 243 467
- EP-B1- 0 956 472
- DE-U1-202007 014 598
- US-A1- 2007 115 683
- US-A1- 2008 225 548
- US-A1- 2009 086 502
- US-B1- 7 330 632

## Description

### TECHNICAL FIELD

The present invention relates to an automotive light.

More in detail, the present invention relates to a rear light for cars, use to which the following description refers purely by way of example without this implying any loss of generality.

### BACKGROUND ART

As is known rear lights of cars usually consist of a substantially basin-shaped, rigid rear body, which is structured so as to stably recessed in a compartment specifically made in the rear part of the vehicle body; of a front lenticular half-shell, which is at least partially made of transparent or semitransparent plastic material, usually possibly colored, and is arranged to close the mouth of the body so as to surface on the outside of the vehicle body; of one or more cup-shaped bodies with an approximately parabolic profile, each of which is positioned in the rear body with its mouth facing a corresponding transparent or semitransparent portion of the front lenticular half-shell and usually have a mirror-finished inner surface; and of a series of incandescent lamps, each of which is arranged close to the bottom of a respective cup-shaped body so as to backlight the portion of the front lenticular half-shell directly above the reflecting cup-shaped body itself.

Furthermore, in some models of automobile rear lights, the front lenticular half-shell is provided with a narrow, elongated, i.e. ribbon-like, transparent or semitransparent portion, which usually surrounds at least one of the transparent or semitransparent portions of the lenticular half-shell which are aligned with the mouths of the reflector cup-shaped bodies.

The backlighting of the ribbon-like portion of the front lenticular half-shell is generally achieved by means of a bar made of photoconductive material, which extends immediately underneath the ribbon-like portion of the front lenticular half-shell, substantially over the whole length of the same ribbon-like portion of the front lenticular half-shell; and of a set of light emitting diodes, traditionally referred to as LEDs, which are positioned at either one or both of the ends of the photoconductive-material bar so as to direct the light produced directly into the body of the bar. The light then propagates into the photoconductive-material bar as a result of the same physical principles which govern the propagation of light within optical fiber cables.

In order to gradually divert the light towards the ribbon-like portion of the front lenticular half-shell, the photoconductive-material bar has a flat longitudinal stripe, along the lateral side which is located on the part opposite to the front lenticular half-shell, which flat longitudinal stripe is locally substantially parallel to the surface of the front lenticular half-shell immediately above it and is provided with a multitude of transversal deflectors with an essentially triangular cross-section which, at regular intervals, are distributed along the entire flat longitudinal stripe, and are profiled so as to divert the light rays which reach the deflecting prism towards the outside of the light-guide bar in the direction of the front lenticular half-shell.

Despite ensuring a significant cost saving as compared to a backlighting system employing a sequence of LEDs distributed under the entire ribbon-like portion of the front lenticular half-shell, the backlighting system which uses the light-guide bars has some limitations in the distribution of light crossing the ribbon-like portion of the front lenticular half-shell.

Indeed, due to the particular shape of the bar, most of the light rays which exit from the conductive-material bar are oriented so as to be locally substantially perpendicular to the laying plane of the ribbon-like portion of the front lenticular half-shell.

As a result, an observer looking at the rear light from a highly angled position with respect to the optical axis of the light, perceives a light signal with a very irregular distribution of light intensity. Furthermore, the appearance of "shadows" on the ribbon-like portion of the front lenticular half-shell tends to be accentuated at the curves of the light-guide bar, whereby the quality of the light signal perceived by the observer is further degraded at the loops of the ribbon-like portion of the front lenticular half-shell.

### DISCLOSURE OF INVENTION

Aim of the present invention is to improve the quality of the light signal perceived by an observer looking at the rear light from a highly angled position with respect to the optical axis of the light.

In compliance with these aims, according to the present invention there is provided an automotive light as specified in claim 1 and preferably, though not necessarily in any one of the dependent claims.

### BRIEF DESCRIPTION OF THE DRAWINGS

The present invention will now be described with reference to the accompanying drawings, which show a non-limitative embodiment thereof, in which:
- figure 1 shows in an exploded axonometric view, with parts removed for clarity, an automobile rear light realized according to the teachings of the present invention;
- figure 2 is a section view of the automotive light shown in figure 1, with parts removed for clarity; whereas
- figures 3 and 4 show details of the light-guide bar used in the automotive light in figure 1 on enlarged scale.

### BEST MODE FOR CARRYING OUT THE INVENTION

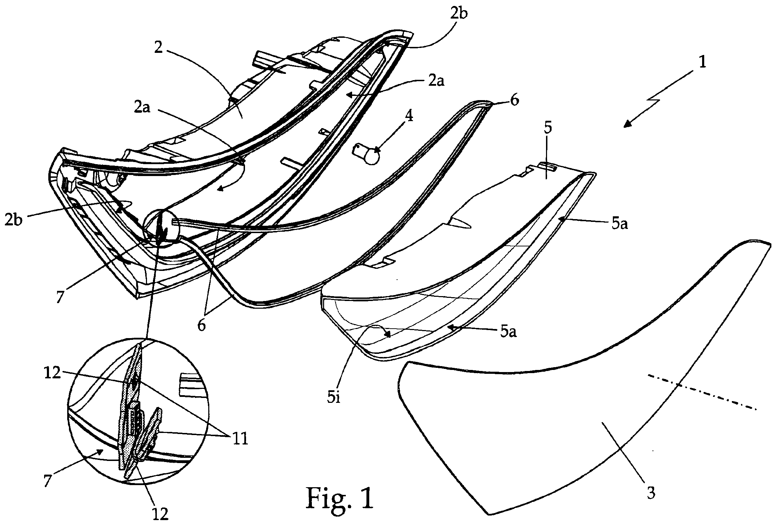

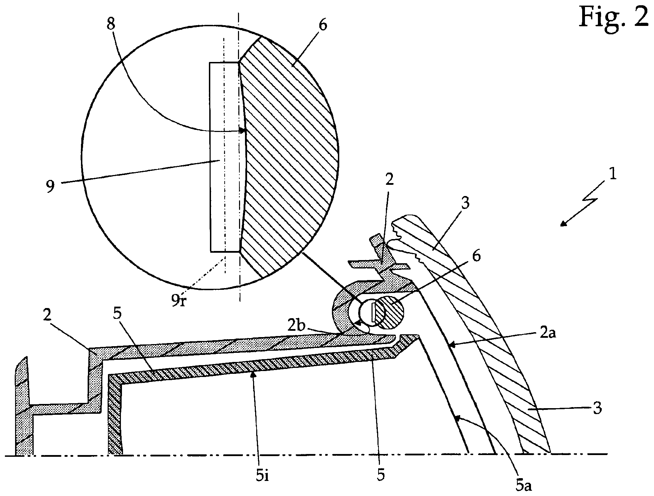

With reference to figures 1 and 2, numeral 1 indicates as a whole an automotive light which may be particularly adapted to be fixed to the rear part of the body of a car, motorcycle or the like, i.e. a rear automotive light.

More in detail, in the example shown, the automotive light 1 is preferably, though not necessarily structured so as to be recessed in the rear part of a car, and comprises:
- a substantially basin-shaped, rigid rear body 2, which is structured so as to be recessed into a compartment specifically made in the rear part of the vehicle body (not shown);
- a front lenticular half-shell 3, which is provided with at least one portion made of transparent or semitransparent, possibly colored, material and is arranged to close the mouth 2a of the rear body 2, preferably, though not necessarily to surface on the outside of the vehicle body (not shown) at the same time; and
- at least one main light source 4, which is structured so as to emit light when electricity powered, and is arranged within the rear body 2 in a position to backlight a corresponding transparent or semitransparent portion of the lenticular half-shell 3.

Obviously, in a different embodiment, the rear body 2 may be structured in order to be simply fixed so as to protrude from the rear part of the vehicle body.

Moreover, the automotive light 1 is preferably provided with at least one light deflector body 5, which is placed inside the rear body 2 so as to surround the main light source 4, and is structured so as to divert the light produced by said main light source 4 towards the transparent or semitransparent portion of the front lenticular half-shell 3 which is intended to be backlighted by the main light source 4.

In the example shown, in particular, the mouth 2a of the rear body 2 is preferably, though not necessarily substantially shaped as a triangle with curved sides; and the rear body 2 is preferably, though not necessarily made of an opaque plastic material by means of an injection molding process.

The front lenticular half-shell 3 instead has a bulging shape which is complementary with that of the mouth 2a of the rear body 2 so as to completely close/seal the rear body 2, and is preferably, though not necessarily entirely made of a transparent or semitransparent plastic material, preferably also with transparent or semitransparent portions of different colors, by means of an injection molding process.

More in detail, in the example shown, in particular, the front lenticular half-shell 3 is preferably made of transparent or semitransparent polycarbonate or polymethyl methacrylate.

On the other hand, with reference to figures 1 and 2, the deflector body 5 preferably, though not necessarily consists of a cup-shaped body 5, which is recessed within the rear body 2 with the mouth 5a facing the lenticular half-shell 3, or rather a corresponding transparent or semitransparent portion of the lenticular half-shell 3, and the light source 4 is arranged close to the bottom of the cup-shaped body 5.

Preferably, though not necessarily, the inner surface 5i of the cup-shaped body 5 is additionally metallized or otherwise mirror-finished, so as to reflect the light produced by the light source 4 towards the transparent or semitransparent portion of the front lenticular half-shell 3 which is placed over the mouth 5a of the cup-shaped body 5.

Similarly to the rear body 2, the cup-shaped body 5 is also preferably made of an opaque plastic material by means of an injection molding process.

On the other hand, the main light source 4 preferably, though not necessarily consists of an incandescent lamp 4 for automotive applications, which protrudes into the cup-shaped body 5 thus engaging a through opening specifically obtained for this purpose at the bottom of the cup-shaped body 5.

With reference to Figures 1 and 2, the automotive light 1 is additionally provided with at least a light-guide profile 6 oblong in shape and made of a photoconductive material, which extends inside the rear body 2 preferably at least partially substantially grazing a corresponding narrow and elongated, i.e. ribbon-like, and possibly also colored, transparent or semitransparent portion of the lenticular half-shell 3; and an auxiliary LED light source 7 or the like, which is structured so as to emit light when electricity powered, and is arranged within the rear body 2, close to one end of the light-guide profile 6, so as to direct the light produced directly into the body of the light-guide profile 6. The light is then propagated within the light-guide profile 6 as a result of the same physical principles which govern the propagation of light within optical fiber cables.

The light-guide profile 6 is additionally structured so as to gradually direct the light which propagates within the body of the light-guide profile 6 towards the part of the lenticular half-shell 3 which is immediately above it, so as to backlight the entire ribbon-like, transparent or semitransparent portion of the lenticular half-shell 3.

More in detail, with reference to figures 1, 2 and 3, the light-guide profile 6 consists of a bar 6 made of a photoconductive material with a substantially circular or elliptical cross-section, which is provided with a substantially flat light-extracting longitudinal stripe 8 which extends along the lateral side of the conductive-material bar 6 opposite to the lenticular half-shell 3, preferably substantially over the whole length of the ribbon-like portion of the lenticular half-shell 3 immediately above it; and of a multitude of deflecting prisms 9 with an approximately triangular cross-section, which are appropriately distributed along the entire longitudinal stripe 8 and are profiled so as to divert the light rays which penetrate into the deflecting prism 9 towards the outside of the light-guide bar 6, on the opposite side with respect to the longitudinal stripe 8, i.e. towards the front lenticular half-shell 3.

In the example shown, in particular, the light-guide bar 6 is preferably shaped so as to at least partially surround/flank the deflecting body 5, and is preferably recessed in a groove or slot 2b which is made for this purpose in the rear body 2, immediately under the ribbon-like portion of the lenticular half-shell 3 to be backlighted; whereas the light source 7 is preferably located close to both ends of the light-guide bar 6, so as to introduce light into the light-guide bar 6 from both ends of the bar.

More in detail, in the example shown, the groove or slot 2b is preferably made in the rear body 2, close to the peripheral edge which delimits the mouth 2a of the rear body 2, so as to completely surround the mouth 5a of the cup-shaped body 5.

With reference to figure 2, the longitudinal light-extracting stripe 8 is thus arranged so as to directly face the bottom of the groove or slot 2b, and is also preferably oriented so as to be locally substantially parallel to the surface of the lenticular half-shell 3 immediately above it.

Moreover, the portion of the outer surface of bar 6 which forms the longitudinal stripe 8 preferably, though not necessarily has a slightly bulging profile towards the centre of the bar, so as to form a concave longitudinal hollow substantially cylinder-sector shaped, with the symmetry axis of the cylindrical surface arranged locally substantially parallel to the centre line L of the longitudinal stripe 8.

The transversal deflecting prisms 9, instead, extend preferably coaxial to an equal number of reference axes 9r locally substantially perpendicular to the centre line L of the longitudinal stripe 8, so that the two larger lateral faces 9a and 9b are arranged crosswise with respect to the centre line L of the longitudinal stripe 8. The larger lateral surface 9a which is intended to be hit/struck by the light rays r propagated into the photoconductive-material bar 6 from the light source 7, is usually referred to as active deflecting face 9a of the prism, and is inclined with respect to the longitudinal stripe 8 so as to divert the incident light rays r towards the outside of the light-guide bar 6, substantially on the side opposite to the longitudinal stripe 8, i.e. towards the lenticular half-shell 3.

Furthermore, in the example shown, the light-guide bar 6 is preferably, though not necessarily made of Plexiglas, transparent polycarbonate or other similar plastic material, preferably by means of an injection molding process.

With reference to figures 2, 3 and 4, the photoconductive-material bar 6 is also provided with a series of additional transversal ridges or grooves 10, which are appropriately distributed/spaced apart along the outer curved surface 6a of the photoconductive-material bar 6 which is immediately adjacent to the longitudinal stripe 8, preferably substantially over the whole length of the longitudinal stripe 8, and are profiled so as to divert the light rays which reach the transversal ridges or grooves 10 towards the outside of the photoconductive-material bar 6, on the opposite side with respect to the bar 6, i.e. towards the front lenticular half-shell 3.

Furthermore, these transversal ridges or grooves 10 are preferably arranged substantially parallel and adjacent, and are oriented so as to be locally inclined by an angle α preferably greater than 10° with respect to the lateral edge 8a of the longitudinal stripe 8, or in turn locally substantially parallel to the centre line L of the longitudinal stripe 8.

More in detail, in the example shown, the transversal ridges or grooves 10 preferably have a substantially V-shaped cross-section and are preferably oriented so as to be substantially perpendicular to the centre line L of the longitudinal stripe 8.

Moreover, the transversal ridges or grooves 10 are preferably arranged on the outer curved surface 6a of the photoconductive-material bar 6 so as to jut out from the side edge 8a of the longitudinal light-extracting stripe 8, i.e. from the boundary line which separates the longitudinal light-extracting stripe 8 from the external curved surface 6a of the photoconductive-material bar 6.

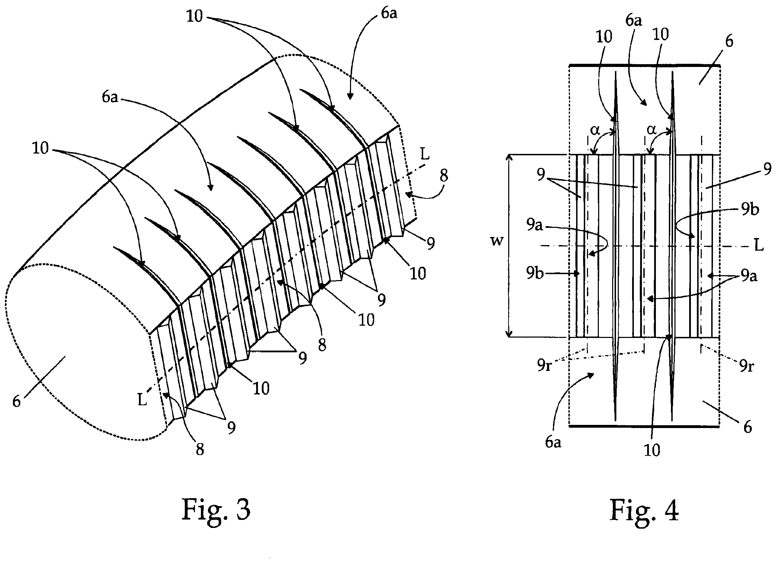

With reference to figures 3 and 4, in the example shown, the transversal ridges or grooves 10 are appropriately distributed/spaced apart on the outer curved surface 6a of the photoconductive-material bar 6, from both sides of the longitudinal stripe 8, and are preferably arranged so as to jut out from the corresponding side edge 8a of the longitudinal light-extracting stripe 8.

Finally, in the example shown, the transversal ridges or grooves 10 which protrude from the two lateral edges 8a of the longitudinal stripe 8, are preferably locally aligned with each other in pairs, and preferably, though not necessarily consist of single, elongated transversal ridges or grooves 10 which extend across the whole width w of the longitudinal stripe 8, preferably at the gaps between the transversal deflecting prisms 9.

With reference to figure 1, instead, the light source 7 preferably consists of two sets of light emitting diodes 11, traditionally referred to as LEDs, which are fixed to two different support bases 12 which, in turn, are positioned/fixed within the rear body 2, each close to a respective end of the photoconductive material bar 6, with the LEDs 11 facing the body of the bar 6, so as to allow the LEDs 11 to convey the light produced directly into the photoconductive-material bar 6. The light then propagates into the photoconductive-material bar 6 as a result of the same physical principles which govern the propagation of light within optical fiber cables.

The general operation of the automotive light 1 is easily inferable from the above description and no further explanations are required.

On the other hand, with regards to the operation of the transversal ridges or grooves 10 made on the photoconductive-material bar 6, experimental tests have indicated that the transversal ridges or grooves 10, like the deflecting prisms 9, allow to extract a large amount of light from the body of the bar 6 having a locally highly inclined direction with respect to the laying plane of the ribbon-like portion 3, and are thus capable of minimizing/eliminating the "shadows" that can be perceived in the light signal from the ribbon-like portion of the lenticular half-shell 3 by an observer looking at the rear light from a highly angled position with respect to the optical axis of the light

The advantages related to the particular structure of the photoconductive-material bar 6 are apparent. The presence of the transversal ridges or grooves 9 by the side of the light-extracting longitudinal stripe 8 considerably improves the perception of the light signal which exits from the ribbon-like portion of the lenticular half-shell 3 without substantially increasing the production costs of the automotive light.

Furthermore, the new photoconductive-material bar 6 may be easily used in automotive lights already in production, without any modification to the light assembly lines.

It is finally apparent that changes and variations can be made to the automotive light 1 described herein without departing from the scope of the present invention.

For example, in another embodiment (not shown), at least one transversal ridge or groove 10, instead of being spaced apart from the immediately adjacent deflecting prisms 9, is positioned immediately adjacent to a corresponding deflecting prism 9 so that the active. deflecting face 9a of the prism is locally substantially aligned and contiguous with the side flank of the transversal ridge or groove 10, so that such a side flank forms an extension of the active deflecting face 9a of the prism, preferably substantially in a seamless manner.

Thereby, the surface which forms the side flank of the transversal ridge or groove 10 contiguous with the active deflecting face 9a of the prism can divert the incident light rays towards the outside of the light-guide bar 6, substantially on the opposite side with respect to the longitudinal stripe 8, i.e. towards the lenticular half-shell 3. Obviously, a different direction with respect to the active deflecting face 9a of the deflecting prism 9 is possible.

## Claims

1. Automotive light (1) comprising a substantially basin-shaped, rear body (2) structured so to be fixed onto the vehicle body; a front lenticular half-shell (3) which has at least a portion in transparent or semitransparent material, and is arranged to close the mouth (2a) of the rear body (2); and at least one main light source (4) which is structured so to emit light when electricity powered, and is arranged within the rear body (2) in a position so as to be able to backlight a corresponding first transparent or semitransparent portion of the front lenticular half-shell (3);
the automotive light (1) further comprises a light-guide bar (6) in photoconductive material which has a substantially circular- or elliptical-shaped cross section and is arranged inside the rear body (2) beneath a corresponding second ribbon-like transparent or semitransparent portion of the front lenticular half-shell (3) to be backlighted, and an auxiliary light source (7) which is structured so to emit light when electricity powered and is arranged within the rear body (2), close to at least one end of the light-guide bar (6), so as to direct the produced light within the body of said light-guide bar (6); said light-guide bar (6) being provided with a substantially flat, longitudinal light-extracting stripe (8) which extends along the lateral side of the light-guide bar (6) opposite to the front lenticular half-shell (3), and a plenty of transverse deflecting prisms (9) that are conveniently distributed along the longitudinal light-extracting stripe (8) and are profiled so as to divert the light rays which penetrate into the same deflecting prisms (9) towards the outside of the light-guide bar (6), on the opposite side with respect to the longitudinal light-extracting stripe (8);
the automotive light (1) being **characterized in that** said light-guide bar (6) is also provided with a series of additional transversal deflecting grooves or ridges (10) which are conveniently distributed/spaced along the external curved surface (6a) of the light-guide bar (6) immediately adjacent to the longitudinal light-extracting stripe (8), and are profiled so as to deflect the light rays that reach the same transversal ridges or grooves (10) towards said second transparent or semitransparent portion of the front lenticular half-shell (3).

2. Automotive light according to Claim 1, **characterized in that** said transversal ridges or grooves (10) are locally arranged substantially parallel and side by side one another.

3. Automotive light according to Claim 1 or 2, **characterized in that** said transversal ridges or grooves (10) are arranged on the external curved surface (6a) of the light-guide bar (6) so as to jut out from the side edge (8a) of the longitudinal light-extracting stripe (8).

4. Automotive light according to Claim 1 or 2, **characterized in that** said transversal ridges or grooves (10) are oriented so as to be locally tilted by an angle (α) greater than 10° with respect to the side edge (8a) of the longitudinal light-extracting stripe (8).

5. Automotive light according to Claim 4, **characterized in that** said transversal ridges or grooves (10) are oriented so as to be locally substantially perpendicular to the centerline (L) of the longitudinal light-extracting stripe (8).

6. Automotive light according to any one of the preceding claims, **characterized in that** said transversal ridges or grooves (10) are conveniently distributed/spaced on the external curved surface (6a) of the light-guide bar (6), on both sides of said longitudinal light-extracting stripe (8).

7. Automotive light according to Claim 6, **characterized in that** said transversal ridges or grooves (10) are arranged so as to jut out from the corresponding side edge (8a) of the longitudinal light-extracting stripe (8).

8. Automotive light according to any one of the preceding claims, **characterized by** also comprising a light deflecting body (5) which is arranged inside the rear body (2) so as to surround the main light source (4), and is structured so as to deflect the light produced by the main light source (4) towards the corresponding transparent or semitransparent portion of the front lenticular half-shell (3) to be backlighted by the main light source (4); the light-guide bar (6) being shaped so as to at least partially surround/flank said deflecting body (5).

9. Automotive light according to any one of the preceding claims, **characterized in that** the auxiliary light source (7) is a LED light source and is arranged close to both ends of the light-guide bar (6) so as to emit light inside the body of the light-guide bar (6) from both ends of the bar.

10. Automotive light according to any one of the preceding claims, **characterized in that** each deflecting prism (9) is arranged on the longitudinal light-extracting stripe (8) so as to be locally transversal to the center line (L) of the longitudinal light-extracting stripe (8), and is provided with an active deflecting face (9a) which is able to deflect the incident light rays towards the outside of the light-guide bar (6).

11. Automotive light according to Claim 10, **characterized in that** one or more of said transversal ridges or grooves (10) is arranged immediately adjacent to a corresponding transversal deflecting prism (9) so that the active deflective face (9a) of the prism is locally substantially aligned and contiguous to the side flank of the transversal ridge or groove (10), so that said side flank forms an extension of the active deflective face (9a) of the prism.

12. Automotive light according to any one of the preceding claims, **characterized in that** the rear body (2) and/or the front lenticular half-shell (3) and/or the light-guide bar (6) are made of plastic material via an injection molding process.

## Patentansprüche

1. Kraftfahrzeuglicht (1), aufweisend einen im Wesentlichen beckenförmigen, hinteren Körper (2), der so strukturiert ist, dass er an der Fahrzeugkarosserie befestigt wird; eine vordere Linsenscheiben-Halbschale (3), die mindestens einen Abschnitt aus einem transparenten oder halbtransparenten Material besitzt und nahe der Mündung (2a) des hinteren Körpers (2) angeordnet ist; und mindestens eine Hauptlichtquelle (4), die so strukturiert ist, dass sie Licht aussendet, wenn Strom eingeschaltet wird, und innerhalb des hinteren Körpers (2) in einer Stellung angeordnet ist, in der sie fähig ist, einen entsprechenden ersten transparenten oder halbtransparenten Abschnitt der vorderen Linsenscheiben-Halbschale (3) von hinten zu beleuchten;
das Kraftfahrzeuglicht (1) weist ferner eine Lichtleiterleiste (6) aus Licht leitendem Material, die einen im Wesentlichen kreis- oder ellipsenförmigen Querschnitt hat und im Inneren des hinteren Körpers (2) unterhalb eines entsprechenden, zu hinterleuchtenden zweiten bandartigen transparenten oder halbtransparenten Abschnitts der vorderen Linsenscheiben-Halbschale (3), angeordnet ist, und eine Hilfslichtquelle (7) auf, die so strukturiert ist, dass sie Licht aussendet, wenn Strom eingeschaltet wird, und innerhalb des hinteren Körpers (2) nahe mindestens einem Ende der Lichtleiterleiste (6) angeordnet ist, um das erzeugte Licht innerhalb des Körpers der Lichtleiterleiste (6) zu lenken; wobei die Lichtleiterleiste (6) mit einem im Wesentlichen flachen, längs verlaufenden, Licht extrahierenden Streifen (8), der entlang dem seitlichen Rand der Lichtleiterleiste (6) der vorderen Linsenscheiben-Halbschale (3) abgewandt verläuft, und einer größeren Anzahl von quer verlaufenden, ablenkenden Prismen (9), die entlang dem längs verlaufenden, Licht extrahierenden Streifen (8) zweckmäßig verteilt sind und so profiliert sind, dass sie die Lichtstrahlen, welche in diese ablenkenden Prismen eindringen, in Richtung der Außenseite der Lichtleiterleiste (6) umlenken, auf die gegenüberliegende Seite mit Bezug auf den längs verlaufenden, Licht extrahierenden Streifen (8), versehen ist;
wobei das Kraftfahrzeuglicht (1) **dadurch gekennzeichnet ist, dass** die Lichtleiterleiste (6) auch mit einer Reihe zusätzlicher, quer verlaufender, ablenkender Vertiefungen oder Erhebungen (10) versehen ist, die entlang der äußeren, gekrümmten Oberfläche (6a) der Lichtleiterleiste (6) unmittelbar an den längs verlaufenden, Licht extrahierenden Streifen (8) angrenzend zweckmäßig verteilt / im Abstand angeordnet und so profiliert sind, dass sie die Lichtstrahlen, die dieselben quer verlaufenden Erhebungen oder Vertiefungen (10) erreichen, in Richtung des entsprechenden zweiten transparenten oder halbtransparenten Abschnitts der vorderen Linsenscheiben-Halbschale (3) ablenken.

2. Kraftfahrzeuglicht nach Anspruch 1, **dadurch gekennzeichnet, dass** die quer verlaufenden Erhebungen oder Vertiefungen (10) lokal im Wesentlichen parallel und Seite an Seite zueinander angeordnet sind.

3. Kraftfahrzeuglicht nach Anspruch 1 oder 2, **dadurch gekennzeichnet, dass** die quer verlaufenden Erhebungen oder Vertiefungen (10) so auf der äußeren, gekrümmten Oberfläche (6a) der Lichtleiterleiste (6) angeordnet sind, dass sie von der Seitenkante (8a) des längs verlaufenden, Licht extrahierenden Streifens (8) vorspringen.

4. Kraftfahrzeuglicht nach Anspruch 1 oder 2, **dadurch gekennzeichnet, dass** die quer verlaufenden Erhebungen oder Vertiefungen (10) so ausgerichtet sind, dass sie lokal in einem Winkel (α) von mehr als 10° in Bezug auf die Seitenkante (8a) des längs verlaufenden, Licht extrahierenden Streifens (8) geneigt sind.

5. Kraftfahrzeuglicht nach Anspruch 4, **dadurch gekennzeichnet, dass** die quer verlaufenden Erhebungen oder Vertiefungen (10) so ausgerichtet sind, dass sie lokal im Wesentlichen senkrecht zur Mittellinie (L) des längs verlaufenden, Licht extrahierenden Streifens (8) angeordnet sind.

6. Kraftfahrzeuglicht nach einem der vorangegangenen Ansprüche, **dadurch gekennzeichnet, dass** die quer verlaufenden Erhebungen oder Vertiefungen (10) auf der äußeren, gekrümmten Oberfläche (6a) der Lichtleiterleiste (6), auf beiden Seiten des längs verlaufenden, Licht extrahierenden Streifens (8), zweckmäßig verteilt / im Abstand angeordnet sind.

7. Kraftfahrzeuglicht nach Anspruch 6, **dadurch gekennzeichnet, dass** die quer verlaufenden Erhebungen oder Vertiefungen (10) so angeordnet sind, dass sie von der entsprechenden Seitenkante (8a) des längs verlaufenden, Licht extrahierenden Streifens (8) vorspringen.

8. Kraftfahrzeuglicht nach einem der vorangegangenen Ansprüche, **dadurch gekennzeichnet, dass** es auch einen Licht ablenkenden Körper (5) aufweist, der so im Inneren des hinteren Körpers (2) angeordnet ist, dass er die Hauptlichtquelle (4) umgibt, und so strukturiert ist, dass er das von der Hauptlichtquelle (4) erzeugte Licht in Richtung des entsprechenden transparenten oder halbtransparenten Abschnitts der vorderen Linsenscheiben-Halbschale (3), der von der Hauptlichtquelle (4) von hinten beleuchtet werden soll, ablenkt; wobei die Lichtleiterleiste (6) so geformt ist, dass sie den ablenkenden Körper (5) mindestens teilweise umgibt/flankiert.

9. Kraftfahrzeuglicht nach einem der vorangegangenen Ansprüche, **dadurch gekennzeichnet, dass** die Hilfslichtquelle (7) eine LED-Lichtquelle ist und nahe den beiden Enden der Lichtleiterleiste (6) so angeordnet ist, dass sie im Inneren des Körpers der Lichtleiterleiste (6) von beiden Enden der Leiste Licht aussendet.

10. Kraftfahrzeuglicht nach einem der vorangegangenen Ansprüche, **dadurch gekennzeichnet, dass** jedes ablenkende Prisma (9) so auf dem längs verlaufenden, Licht extrahierenden Streifen (8) angeordnet ist, dass es lokal quer zur Mittellinie (L) des längs verlaufenden, Licht extrahierenden Streifens (8) verläuft, und mit einer aktiven, ablenkenden Fläche (9a) versehen ist, die fähig ist, die auftreffenden Lichtstrahlen in Richtung der Außenseite der Lichtleiterleiste (6) abzulenken.

11. Kraftfahrzeuglicht nach Anspruch 10, **dadurch gekennzeichnet, dass** eine oder mehr der quer verlaufenden Erhebungen oder Vertiefungen (10) unmittelbar an ein entsprechendes, quer verlaufendes, ablenkendes Prisma (9) angrenzend so angeordnet sind, dass die aktive, ablenkende Fläche (9a) des Prismas lokal im Wesentlichen nach der Seitenflanke der quer verlaufenden Erhebung oder Vertiefung (10) ausgerichtet ist und so an diese anschließt, dass die Seitenflanke eine Verlängerung der aktiven, ablenkenden Fläche (9a) des Prismas bildet.

12. Kraftfahrzeuglicht nach einem der vorangegangenen Ansprüche, **dadurch gekennzeichnet, dass** der hintere Körper (2) und/oder die vordere, Linsenscheiben-Halbschale (3) und/oder die Lichtleiterleiste (6) aus einem durch ein Spritzgießverfahren erhaltenen Kunststoffmaterial hergestellt sind.

## Revendications

1. Phare (1) d'automobile comprenant un corps arrière (2) sensiblement en forme de cuvette structuré afin d'être fixé sur le corps d'un véhicule ; une demi-coque lenticulaire (3) avant qui a au moins une partie réalisée avec un matériau transparent ou semitransparent, et est agencée pour fermer l'embouchure (2a) du corps arrière (2) ; et au moins une source de lumière principale (4) qui est structurée pour émettre de la lumière lorsqu'elle est alimentée en électricité et est agencée à l'intérieur du corps arrière (2) dans une position afin de pouvoir rétroéclairer une première partie transparente ou semi-transparente de la demi-coque lenticulaire (3) avant ;
le phare (1) d'automobile comprend en outre une barre de guidage de lumière (6) réalisée avec un matériau photoconducteur qui a une section transversale de forme sensiblement circulaire ou elliptique et est agencée à l'intérieur du corps arrière (2) au-dessous d'une seconde partie transparente ou semi-transparente en forme de ruban de la demi-coque lenticulaire (3) destinée à être rétroéclairée, et une source de lumière auxiliaire (7) qui est structurée pour émettre de la lumière lorsqu'elle est alimentée en électricité et est agencée à l'intérieur du corps arrière (2), à proximité d'au moins une extrémité de la barre de guidage de lumière (6), afin de diriger la lumière produite à l'intérieur du corps de ladite barre de guidage de lumière (6) ; ladite barre de guidage de lumière (6) étant prévue avec une bande longitudinale d'extraction de lumière (8) sensiblement plate qui s'étend le long du côté latéral de la barre de guidage de lumière (6) opposé à la demi-coque lenticulaire (3) avant, et beaucoup de prismes déflecteurs transversaux (9) qui sont répartis de manière appropriée le long de la bande longitudinale d'extraction de lumière (8) et sont profilés afin de dévier les rayons lumineux qui pénètrent dans les mêmes prismes déflecteurs (9) vers l'extérieur de la barre de guidage de lumière (6), sur le côté opposé par rapport à la bande longitudinale d'extraction de lumière (8) ;
le phare (1) d'automobile étant **caractérisé en ce que** ladite barre de guide de lumière (6) est également prévue avec une série de rainures ou crêtes transversales de déflexion (10) supplémentaires qui sont réparties/espacées de manière appropriée le long de la surface incurvée externe (6a) de la barre de guidage de lumière (6) immédiatement adjacente à la bande longitudinale d'extraction de lumière (8), et sont profilées afin de dévier les rayons lumineux qui atteignent les mêmes crêtes ou rainures transversales (10) vers ladite seconde partie transparente ou semi-transparente de la demi-coque lenticulaire (3) avant.

2. Phare d'automobile selon la revendication 1, **caractérisé en ce que** lesdites crêtes ou rainures transversales (10) sont agencées localement de manière sensiblement parallèle et côte à côte les unes par rapport aux autres.

3. Phare d'automobile selon la revendication 1 ou 2, **caractérisé en ce que** lesdites crêtes ou rainures transversales (10) sont agencées sur la surface incurvée externe (6a) de la barre de guidage de lumière (6) afin de faire saillie du bord latéral (8a) de la bande longitudinale d'extraction de lumière (8).

4. Phare d'automobile selon la revendication 1 ou 2, **caractérisé en ce que** lesdites crêtes ou rainures transversales (10) sont orientées afin d'être inclinées localement selon un angle (α) supérieur à 10° par rapport au bord latéral (8a) de la bande longitudinale d'extraction de lumière (8).

5. Phare d'automobile selon la revendication 4, **caractérisé en ce que** lesdites crêtes ou rainures transversales (10) sont orientées afin d'être localement sensiblement perpendiculaires à la ligne centrale (L) de la bande longitudinale d'extraction de lumière (8).

6. Phare d'automobile selon l'une quelconque des revendications précédentes, **caractérisé en ce que** lesdites crêtes ou rainures transversales (10) sont réparties/espacées sur la surface incurvée externe (6a) de la barre de guidage de lumière (6), sur deux côtés de ladite bande longitudinale d'extraction de lumière (8) .

7. Phare d'automobile selon la revendication 6, **caractérisé en ce que** lesdites crêtes ou rainures transversales (10) sont agencées afin de faire saillie du bord latéral (8a) correspondant de la bande longitudinale d'extraction de lumière (8).

8. Phare d'automobile selon l'une quelconque des revendications précédentes, **caractérisé en ce qu'**il comprend également un corps déflecteur de lumière (5) qui est agencé à l'intérieur du corps arrière (2) afin d'entourer la source de lumière principale (4) et est structuré afin de dévier la lumière produite par la source de lumière principale (4) vers la partie transparente ou semi-transparente correspondante de la demi-coque lenticulaire (3) avant destinée à être rétroéclairée par la source de lumière principale (4) ; la barre de guidage de lumière (6) étant formée pour entourer/encadrer au moins partiellement ledit corps déflecteur (5).

9. Phare d'automobile selon l'une quelconque des revendications précédentes, **caractérisé en ce que** la source de lumière auxiliaire (7) est une source de lumière à LED et est agencée à proximité des deux extrémités de la barre de guidage de lumière (6) afin d'émettre de la lumière à l'intérieur du corps de la barre de guidage de lumière (6) à partir des deux extrémités de la barre.

10. Phare d'automobile selon l'une quelconque des revendications précédentes, **caractérisé en ce que** chaque prisme déflecteur (9) est agencé sur la bande longitudinale d'extraction de lumière (8) afin d'être localement transversal à la ligne centrale (L) de la bande longitudinale d'extraction de lumière (8), et est prévu avec une face de déflexion active (9a) qui peut dévier les rayons de lumière incidente vers l'extérieur de la barre de guidage de lumière (6).

11. Phare d'automobile selon la revendication 10, **caractérisé en ce qu'**une ou plusieurs desdites crêtes ou rainures transversales (10) sont agencées de manière immédiatement adjacente à un prisme déflecteur transversal (9) correspondant de sorte que la face de déflexion active (9a) du prisme est localement sensiblement alignée et contiguë au flanc latéral de la crête ou rainure transversale (10), de sorte que ledit flanc latéral forme une extension de la face de déflexion active (9a) du prisme.

12. Phare d'automobile selon l'une quelconque des revendications précédentes, **caractérisé en ce que** le corps arrière (2) et/ou la demi-coque lenticulaire (3) avant et/ou la barre de guidage de lumière (6) sont réalisés en matière plastique via un procédé de moulage par injection.
